# EUROPÄISCHE PATENTSCHRIFT

(11) **EP 1 629 934 B1**
(45) Veröffentlichungstag und Bekanntmachung des Hinweises auf die Patenterteilung: **15.06.2011**
(21) Anmeldenummer: 05018760.8
(22) Anmeldetag: 30.08.2005
(51) Int. Cl.: B23K 26/34, B23K 26/03, B22F 3/105, B26F 1/44

(54) **Verfahren zur Herstellung einer Schneid- oder Prägewalze mittels Laserauftragsschweissen**
Process for manufacturing of a cut or embossing roll by laser buildup welding
Procédé de fabrication de rouleau de coupage ou d'emboutissage au moyen de soudage par recouvrement

(30) Priorität: 31.08.2004 DE 102004042492
(43) Veröffentlichungstag der Anmeldung: 01.03.2006
(73) Patentinhaber: Winkler + Dünnebier Aktiengesellschaft, 56564 Neuwied (DE)
(72) Erfinder: Closmann, Michael, 56316 Raubach (DE)
(74) Vertreter: Müller, Gerald Christian

(56) Entgegenhaltungen:
- EP-A- 1 396 556
- WO-A-01/56736
- DE-A1- 2 907 325
- DE-A1- 19 533 960
- DE-A1- 19 832 185
- DE-C1- 19 514 285
- DE-C1- 19 530 641
- US-A- 5 855 149
- HOFFMANN E ET AL: "Prozessüberwachung druch Temperaturregelung beim Generieren mit CO2-Laserstrahlung" LASER UND OPTOELEKTRONIK, FACHVERLAG GMBH. STUTTGART, DE, Bd. 28, Nr. 3, 1. Januar 1996 (1996-01-01), Seiten 59-67, XP008091945 ISSN: 0722-9003
- HOFFMANN E ET AL: "Laserstrahl-Auftragschweissen: Höchste Pràzision für Oberflächenschutz und Reparatur" PHOTONIK,, Bd. 1, 1. Januar 2004 (2004-01-01), Seite 32, XP008091935 ISSN: 1432-9778

## Beschreibung

### 1. Anwendungsgebiet

Die vorliegende Erfindung betrifft ein Verfahren gemäß dem Oberbegriff des Anspruchs 1 zur Herstellung einer Schneid- oder Prägewalze mittels Laserauftragsschweißen insbesondere zur Verwendung in einer Briefhüllen- oder Etikettenherstellungsmaschine zum Schneiden oder Prägen von bewegten Materialbahnen oder bewegten Einzelzuschnitten. Die US 5 855 149 A offenbart ein solches Verfahren.

### II. Technischer Hintergrund

In Briefhüllen- oder Etikettenherstellungsmaschinen rotieren Schneid- oder Prägewalzen mit verhältnismäßig hoher Drehzahl, um Schnitte oder Prägungen an bewegten Papierbahnen oder bewegten Einzelzuschnitten auszuführen. Das dabei zu schneidende bzw. zu prägende Papier enthält metallische und nichtmetallische Bestandteile sowie Erden und Tone, so dass die Schneiden- bzw. Prägevorsprünge erheblichen Belastungen ausgesetzt sind und einem starken Verschleiß unterliegen. Aus diesem Grund war es vor einiger Zeit üblich, die Messerschneiden von Schneidwalzen aus dem Vollen zu fräsen. Dementsprechend bestand die gesamte Schneidwalze aus einem hochwertigen Werkstoff, der dem Anforderungsprofil nach an sich nur für das Schneidmesser bzw. die Messerschneide auf der Schneidwalze erforderlich gewesen wäre. Hohe Kosten bei der Herstellung der Schneidwalzen waren die Folge.

In der DE 29 07 325 A1 wurde daher vorgeschlagen, das Schneidmesser in Form von auf den Walzengrundkörper aufgeschweißten Schweißraupen aus einem hochlegierten, verschleißfesten und relativ harten Stahl auszubilden. Dadurch konnte der Walzengrundkörper aus einem gegenüber dem Schneidenwerkstoff minderwertigem und entsprechend billigem Werkstoff hergestellt werden. Das Aufbringen der Schweißraupen im Sinne dieses bekannten Verfahrens erfolgte durch Elektrodrahtschweißen. Dieses Schweißverfahren beansprucht verhältnismäßig viel Zeit zum Aufbringen der Schweißnähte auf den Walzengrundkörper, verursacht unerwünschte Schweißspritzer auf der Oberfläche des Walzengrundkörpers und führt nicht selten zu Lunkern und/oder Rissen in den Schweißnähten. Die letztgenannten Lunker bzw. Risse mindern die mechanische Belastbarkeit der hochbeanspruchten Schneidmesser und somit deren Standzeit.

Ein anderes Schweißverfahren, nämlich das Laserauftragsschweißen, ist beispielsweise aus der DE 198 32 185 A1 bekannt. Dort wird zur Durchführung des Laserauftragsschweißens insbesondere die Verwendung eines Diodenlasers vorgeschlagen, der einen pulverförmigen Zusatzwerkstoff schmilzt, um dadurch Formwerkzeuge für den Spritz- und Druckguss zu reparieren.

Eine weitere Anwendung des an sich bekannten Laserauftragsschweißens wird ― allerdings nicht mit einem Diodenlaser ― in der DE 195 33 960 A1 beschrieben. Dort werden metallische Formwerkzeuge hergestellt, indem ein metallhaltiges Pulver in einem Schmelzbereich des Laserstrahls schichtweise aufgeschmolzen wird und aufgebrachte Schichten anschließend spanend nachbearbeitet werden. Es wurde erkannt, dass ein nicht unwesentlicher Aspekt bei der Prozessführung des schichtweisen Aufbaus des Werkstücks durch Aufschmelzen des Pulvers in der Temperatur des Werkstücks besteht. Nur wenn jede Schicht unter den gleichen Bedingungen hergestellt wird, kann die gewünschte Homogenität mit den damit verbundenen, guten mechanischen Eigenschaften erreicht werden. Aus diesem Grund wird ein Temperaturmesssystem vorgeschlagen, das nach dem Zerspanen einer Schicht die Oberflächentemperatur des Werkstücks erfasst und veranlasst, dass der weitere schichtweise Aufbau des Werkstücks erst dann erfolgt, wenn die erfasste Temperatur einen vorgegebenen Wert nicht übersteigt. Dies führt naturgemäß zu zeitlichen Verzögerungen im Produktionsablauf.

### III. Darstellung der Erfindung

### a) Technische Aufgabe

Es ist daher Aufgabe der vorliegenden Erfindung, ein Verfahren bzw. eine Vorrichtung zur Herstellung einer Schneid- oder Prägewalze mit aus der Oberfläche eines Walzengrundkörpers hervorstehendem Schneidmesser oder Prägevorsprung mittels Laserauftragsschweißen zu schaffen, das bzw. die eine möglichst optimale Homogenität des Schneidmessers bzw. des Prägevorsprungs bei gleichzeitiger Minimierung der Dauer und Kosten des Produktionsprozesses gewährleistet.

### b) Lösung der Aufgabe

Diese Aufgabe wird mit einem Verfahren mit den Merkmalen des Anspruchs 1 gelöst. Weitere Ausgestaltungen der vorliegenden Erfindung ergeben sich aus den Unteransprüchen.

Das erfindungsgemäße Verfahren erzeugt das Schneidmesser bzw. den Prägevorsprung auf dem Walzengrundkörper in ein- oder mehrschichtigem Aufbau mittels Laserauftragsschweißen. Dabei wird jede Schicht mit Hilfe eines pulverförmigen Zusatzwerkstoffs erzeugt, der in einem an der Schweißstelle entstehenden Schmelzbad von dem Laserstrahl geschmolzen wird. Die von dem Schmelzbad emittierte Wärme- und/oder Lichtstrahlung stellt ein Maß für die Temperatur des Schmelzbades dar. Sie wird erfindungsgemäß erfasst bzw. detektiert und die Leistung bzw. das Energieniveau des verwendeten Lasers wird in Abhängigkeit von der detektierten Temperatur des Schmelzbades gesteuert oder geregelt, und zwar derart, dass die Temperatur des Schmelzbades während des Auftragens der jeweiligen Schicht auf den Walzengrundkörper im Wesentlichen konstant bleibt.

Da die Temperatur des Schmelzbades während des Auftragsschweißvorgangs im Wesentlichen konstant ist, erfolgt stets eine gleichmäßige Aufschmelzung des als Zusatzwerkstoff verwendeten, metallischen Pulvers. Dies wiederum hat die gewünschte Homogenität des erzeugten Schneidmessers bzw. des erzeugten Prägevorsprungs zur Folge, so dass die mechanischen Eigenschaften des Schneidmessers bzw. des Prägevorsprungs erheblich verbessert werden können. Da zumindest während des Auftragsschweißvorgangs ständig die von dem Schmelzbad emittierte Wärme- und/oder Lichtstrahlung erfasst und die Leistung des Lasers in Abhängigkeit davon gesteuert oder geregelt wird, kann das erfindungsgemäße Verfahren in Echtzeit auf Temperaturschwankungen des Schmelzbades reagieren. Dies bedeutet eine entsprechende Beschleunigung des Auftragsschweißvorgangs, da keine wesentlichen Abkühl- oder Aufheizzeiten berücksichtigt werden müssen.

Das Laserauftragsschweißen verursacht keine wesentliche Aufmischung zwischen dem Grundwerkstoff des Walzengrundkörpers einerseits und dem aufgeschmolzenen Pulver andererseits. Dies bedeutet, dass der Werkstoff des herzustellenden Schneidmessers bzw. Prägevorsprungs optimal an das jeweilige Anforderungsprofil angepasst werden kann. Je nach Anforderungsprofil besteht die Möglichkeit, die Zusammensetzung des pulverförmigen Zusatzwerkstoffs in geeigneter Weise zu wählen. Je nach Zusammensetzung der den Zusatzwerkstoff bildenden Pulverpartikel weist der Zusatzwerkstoff ein anderes Strahlungsabsorptions- und -reflektionsvermögen auf. Nach dem Festlegen der Pulverzusammensetzung für ein bestimmtes Anforderungsprofil wird daher vorzugsweise die Wellenlänge des von dem Laser abgegeben Laserlichts in Abhängigkeit von dem Strahlungsabsorptions- und -reflektionsvermögen der Pulverzusammensetzung derart eingestellt, dass der Aufschmelzvorgang des Pulvers mit optimalem Wirkungsgrad stattfindet.

Vorzugsweise wird das Laserauftragsschweißen mit einem Diodenlaser, insbesondere einem niedrigenergetischen Diodenlaser durchgeführt. Dabei weist das mit dem Diodenlaser erzeugte Laserlicht vorzugsweise eine Wellenlänge ≤ 1000 nm, insbesondere eine Überlagerung von Wellenlängen aus dem Bereich von 808 nm bis 980 nm, auf. Ein Diodenlaser mit einer Überlagerung der Wellenlängen von 940 nm und 980 nm lieferte gute Schweißergebnisse im Sinne der vorliegenden Erfindung. Ein niedrigenergetischer Diodenlaser hat im Übrigen den Vorteil, dass der Grundwerkstoff des Walzengrundkörpers nur gering erwärmt wird, d. h. während des Auftragsschweißens eine Temperatur des Walzengrundkörpers von ca. 50° oder 60° C nicht überschritten wird. Ein für die Zwecke der vorliegenden Erfindung geeigneter Diodenlaser ist beispielsweise der Laser mit der Typenbezeichnung LDF 1000-2500 von der Firma Laserline GmbH aus Mülheim-Kärlich.

Der Querschnitt des Laserstrahls eines Diodenlasers weist üblicherweise eine elliptische Form auf. Dies führt zu einer Richtungsabhängigkeit des Laserstrahlquerschnitts, die das Schweißen eines beispielsweise in der Aufsicht rechteckförmigen Schneidmessers mit gleichmäßiger Breite nicht ermöglicht. Vorzugsweise wird daher der Querschnitt des Laserstrahls des Diodenlasers homogenisiert, d. h. beispielsweise mit Hilfe einer Lichtleitfaser in einen kreisrunden, richtungsunabhängigen Querschnitt umgewandelt. Ein derartiger Querschnitt ermöglicht das Auftragsschweißen eines Schneidmessers mit in der Aufsicht beliebiger Geometrie bei konstanter Breite der Schweißnaht.

In Abhängigkeit von der gewünschten Höhe des Schneidmessers bzw. des Prägevorsprungs wird letzteres bzw. letzterer in Ein- oder Mehrlagentechnik hergestellt. Dies bedeutet, dass das Schneidmesser oder der Prägevorsprung bereits nach einmaligem Auftragsschweißen einer Schweißnaht oder nach mehrmaligem übereinander Auftragen einer Schweißnaht für die sich anschließende spanende Bearbeitung fertig gestellt ist. Je nach Pulverzusammensetzung kann eine einzelne Schweißnaht eine Höhe im Bereich von 0,6 bis 1,0 mm und eine Breite im Bereich von 2,5 bis 3,0 mm aufweisen.

Um den pulverförmigen Zusatzwerkstoff zu der Schweißstelle zu transportieren, wird vorzugsweise eine pneumatische Pulverzuführeinrichtung vorgesehen, die dem Arbeitskopf den pulverförmigen Zusatzwerkstoff mit Hilfe eines Transportgases von einem Vorratsbehälter zuführt. Besonders vorteilhaft ist es, für das Transportgas eine solche Gaszusammensetzung zu wählen, die gleichzeitig als Schutzgas fungiert, d.h. insbesondere ein Oxidieren der Schweißnaht verhindert. Durch Wahl der Zusammensetzung des Transportgases kann darüber hinaus der Abwärmestrom von der Schweißstelle beeinflusst werden. Alternativ ist denkbar, eine von dem Transportgas unabhängige und separate Schutzgaszuführeinrichtung anzuordnen, um die Zusammensetzung des Transportgases losgelöst von einer Schutzgasfunktion wählen zu können.

Da bei dem erfindungsgemäßen Verfahren nicht mit Drahtwerkstoffen, sondern mit einem pulverförmigen Zusatzwerkstoff geschweißt wird, sind neuartige noch niemals hergestellte Metalllegierungen herstellbar, die nicht als Halbzeug am Markt zu erhalten sind, weil ihre Herstellung nicht möglich ist.

Beispielsweise sind Metallbasiswerkstoffe mit Karbiden, Nitriden oder Oxiden (Keramik) mischbar und fehlerfrei verschweißbar, wenn die Prozessparameter, wie die Zusammensetzung des Transportgases, die Pulvermenge, die Laserleistung, der Vorschub des Arbeitskopfes relativ zu dem Walzengrundkörper und das Schutzgas, bekannt sind und optimal aufeinander abgestimmt werden. Es ist auch eine nachträgliche Bearbeitbarkeit möglich, insbesondere eine nachträgliche spanende Bearbeitbarkeit. Bei dem Schutzgas kann es sich beispielsweise um Argon, Helium, Stickstoff, Wasserstoff oder Gemische aus diesen Gasen handeln.

Als Basiswerkstoff für die Pulverzusammensetzung eignen sich vorzugsweise Eisen, Kobalt oder Nickel. Beispielsweise kann die Pulverzusammensetzung weniger als oder gleich 90 Gew.-% Eisen oder weniger als oder gleich 70 Gew.-% Kobalt oder weniger als oder gleich 70 Gew.-% Nickel jeweils mit einem oder mehreren zusätzlichen Legierungsbestandteil(en) enthalten, der oder die aus der Gruppe bestehend aus B, Si, W, V, Cr, C, Si, Co, Mn, Mg, Ti, Zirkonoxid und Aluminiumoxid ausgewählt ist oder sind. Die erzeugten Hartstoffverbindungen können insbesondere Chromkarbid, Wolframkarbid, Vanadiumkarbid, Silizium und/oder Bor enthalten. Weitere Legierungsbestandteile sind mischbar. Als Oxideinlagerungen sind Zirkonoxid und/oder Aluminiumoxid möglich.

Es ist zu beachten, dass die Legierungsbestandteile Absorptions- und Reflektionsgrade aufweisen, die sehr stark von dem verwendeten Laser abhängen. Die Legierungsbestandteile und der Laser müssen daher zueinander passen, so dass eine hinreichende Schweißbarkeit des pulverförmigen Zusatzwerkstoffs gegeben ist.

Die mit dem erfindungsgemäßen Verfahren herstellbaren Schneidmesser bzw. Prägevorsprünge sind in metallurgischer Hinsicht insbesondere im Bereich der Verbindungszone mit dem Grundwerkstoff des Walzengrundkörpers frei von Rissen oder sonstigen Anomalien. Sie weisen ein dendritisches Gefüge auf, zwischen dessen Nadeln beispielsweise Karbide mit großer Härte bis zu 2000 HV entstehen.

Die Vorrichtung zur Durchführung des erfindungsgemäßen Verfahrens weist als Einrichtung zum Erfassen der von dem Schmelzbad emittierten Wärme- und/oder Lichtstrahlung vorzugsweise einen optischen Strahlteiler und eine Messeinrichtung zur Ermittlung eines der Temperatur des Schmelzbades entsprechenden Signals auf. Dabei ist der Strahlteiler im Strahlengang des Laserlichts angeordnet. Ein Teil der von dem Schmelzbad emittierten Strahlung gelangt zurück in den Arbeitskopf und wird dort von dem Strahlteiler einer Messeinrichtung zur Ermittlung eines der Temperatur des Schmelzbades entsprechenden Signals umgelenkt. Dieses Signal wird schließlich dem Steuer- oder Regelkreis des Lasers zugeführt, so dass die Leistung des Lasers bei Überschreitung einer Soll-Temperatur gedrosselt und bei Unterschreitung der Soll-Temperatur erhöht wird. Das Energieniveau im Schmelzbad bleibt somit im Wesentlichen konstant, so dass der Schmelzprozess des pulverförmigen Zusatzwerkstoffs kontinuierlich ablaufen kann.

### c) Ausführungsbeispiele

Nachfolgend wird eine Ausführungsform der vorliegenden Erfindung beispielhaft anhand der beigefügten Zeichnungen beschrieben. Es zeigen:
- Fig. 1:: Eine schematische Seitenansicht einer Vorrichtung zur Durchführung des erfindungsgemäßen Verfahrens;
- Fig. 2:: eine schematische Schnittansicht des Arbeitskopfes der in Fig. 1 gezeigten Vorrichtung;
- Fig. 3:: eine Aufsicht auf eine mit Hilfe des erfindungsgemäßen Verfahrens hergestellte Schneidwalze mit rechteckförmigem Schneidmesser; und
- Fig. 4:: eine vergrößerte Schnittansicht gemäß Schnitt A-A in Fig. 3.

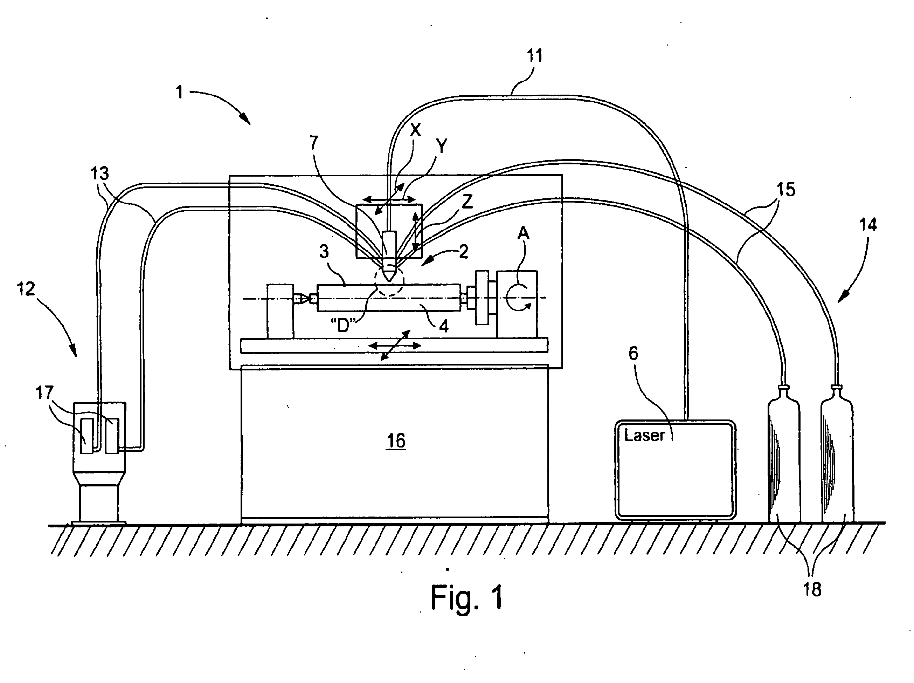

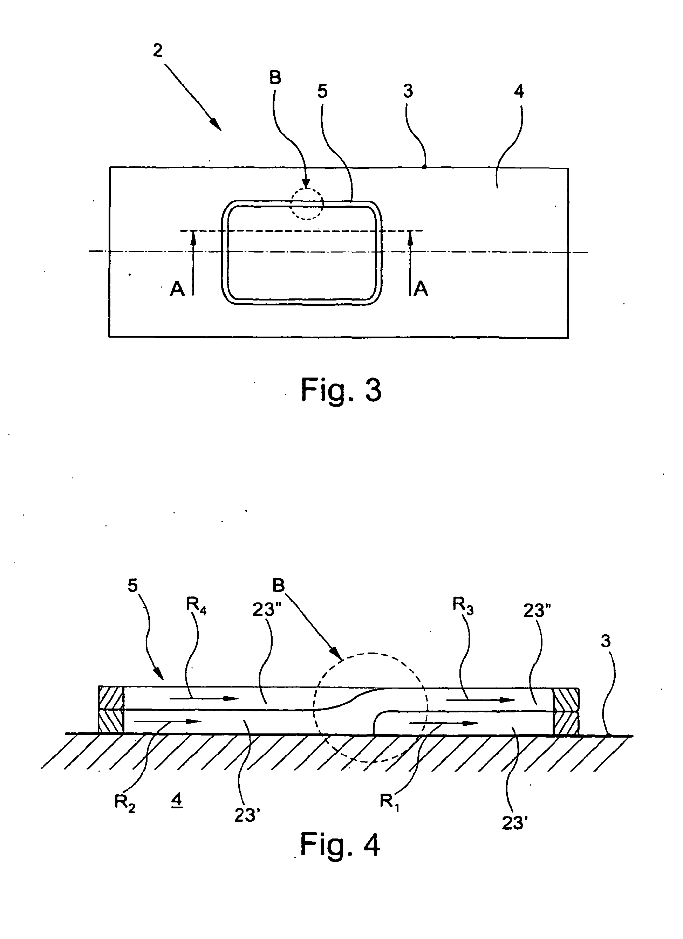

Fig. 1 zeigt eine Vorrichtung 1 zur Herstellung einer Schneidwalze 2 mit aus der Oberfläche 3 eines Walzengrundkörpers 4 hervorstehendem Schneidmesser 5. Das auch als Messerschneide bezeichnete Schneidmesser 5 ist in Fig. 3 zu erkennen. Die Schneidwalze 2 kommt insbesondere in Briefhüllen- und Etikettenherstellungsmaschinen zum Einsatz.

Die Vorrichtung 1 weist einen Arbeitskopf 7 auf, der in einer vorzugsweise CNC gesteuerten Werkzeugmaschine 16 gehaltert ist und relativ zu dem zylindrischen Walzengrundkörper 4, der um eine Drehachse A drehbar eingespannt sein kann, in drei senkrecht aufeinander stehenden Raumrichtungen X, Y und Z bewegt werden kann, die mit entsprechenden Pfeilen in Fig. 1 gekennzeichnet sind. Alternativ ist denkbar, den Arbeitskopf 7 ortsfest anzuordnen und den Walzengrundkörper 4 relativ zu dem ortsfesten Arbeitskopf 7 in den drei Raumrichtungen X, Y und Z zu verfahren und um die Drehachse A zu drehen. Alternativ ist auch denkbar, den Arbeitskopf 7 in den Raumrichtungen X, Y, Z und um die Drehachse A um einen ortsfesten Walzengrundkörper 4 zu bewegen.

Bei der gezeigten Ausführungsform ist der Arbeitskopf 7 mit verschiedenen außerhalb des Arbeitskopfes 7 angeordneten Systemen verbunden. Wie in Fig. 1 zu erkennen ist, befindet sich rechts neben der Werkzeugmaschine 16 ein Laser 6, bei dem es sich vorzugsweise um einen Diodenlaser handelt. Der von dem Diodenlaser 6 erzeugte Laserstrahl wird durch einen Lichtleiter 11, vorzugsweise ein Glasfaserkabel, dem Arbeitskopf 7 zugeführt. Am Ausgangsende des Lichtleiters 11 tritt ein Laserstrahl mit kreisrundem Querschnitt bzw. Spot in den Arbeitskopf 7 ein. Alternativ ist denkbar, den Diodenlaser 6 nicht als separate Einheit auszubilden, sondern stattdessen in den Arbeitskopf 7 zu integrieren, so dass außerhalb der Werkzeugmaschine 16 kein Raum für den Diodenlaser 6 zur Verfügung stehen muss.

In Fig. 1 links neben der Werkzeugmaschine 16 befindet sich eine pneumatische Pulverzuführeinrichtung 12, die dem Arbeitskopf 7 den für das Auftragsschweißen erforderlichen, pulverförmigen Zusatzwerkstoff mit Hilfe eines Transportgases zuführt. Bei der gezeigten Ausführungsform umfasst die Pulverzuführeinrichtung 12 zwei Pulverbehälter 17 sowie zwei von diesen zu dem Arbeitskopf 7 führende Pulvertransportleitungen 13 in Form von flexiblen Schläuchen. Druckbeaufschlagtes Transportgas wird durch die Pulverbehälter 17 geführt, erfasst dabei die in diesen befindlichen Pulverpartikel und transportiert sie durch die Pulvertransportleitungen 13 zu dem Arbeitskopf 7. Besonders vorteilhaft ist es, die Zusammensetzung des Transportgases derart zu wählen, dass es neben der reinen Transport- zusätzlich eine Schutzgasfunktion übernimmt.

Denkbar ist jedoch auch eine separate Schutzgaszuführeinrichtung 14, wie sie am rechten Rand der Fig. 1 zu erkennen ist. Bei der gezeigten Ausführungsform umfasst die Schutzgaszuführeinrichtung 14 zwei das Schutzgas enthaltende Gasflaschen 18 sowie zwei Schutzgastransportleitungen 15 in Form zweier flexibler Schläuche. Durch die Schutzgastransportleitungen 15 strömt das unter Druck stehende Schutzgas zu dem Arbeitskopf 7.

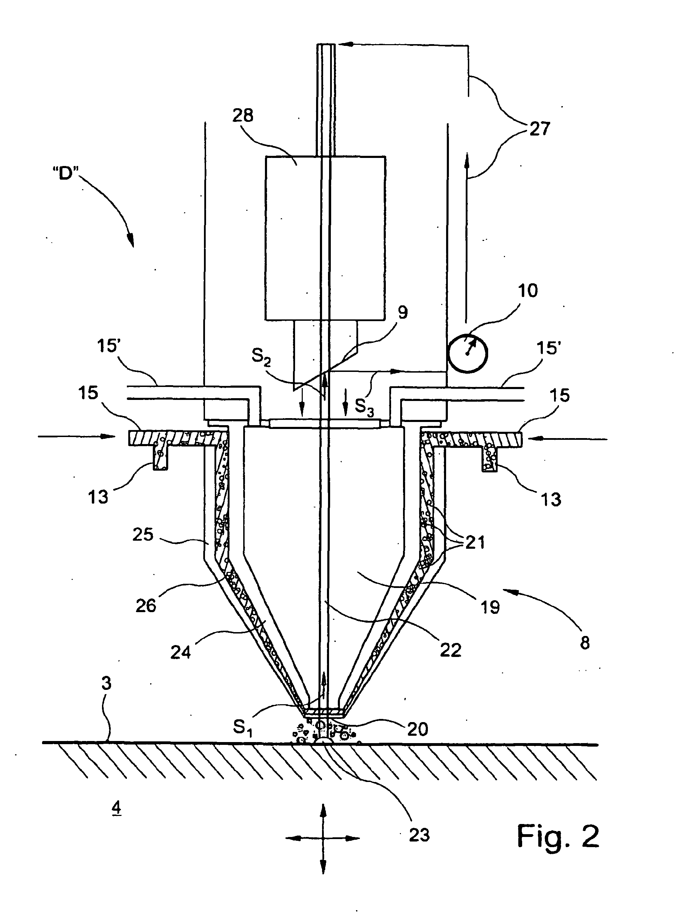

In Fig. 2 ist eine schematische Schnittansicht des Details "D" des Arbeitskopfes 7 aus Fig. 1 gezeigt. Der Arbeitskopf 7 weist an seinem unteren Ende eine Pulverdüse 8 auf, die in ihrem Inneren mit zwei Düsenkanälen 19 und 26 versehen ist, die sich in Fig. 2 nach unten bis zur Düsenaustrittsöffnung 20 konisch verjüngen. Dem als Schutzgas- und Pulvertransportkanal dienenden Düsenkanal 26 wird einerseits durch die beiden Pulvertransportleitungen 13 pulverförmiger Zusatzwerkstoff, dessen Pulverpartikel 21 in Fig. 2 dargestellt sind, sowie andererseits durch die beiden Schutzgasleitungen 15 Schutzgas zugeführt. Wie in Fig. 2 außerdem zu erkennen ist, durchläuft der von dem Diodenlaser 6 erzeugte Laserstrahl 22 geradlinig den Düsenkanal 19 und tritt zusammen mit den in einem Pulverstrom fokussierten Pulverpartikeln 21 am unteren Ende der Pulverdüse 8 aus der Düsenaustrittsöffnung 20 aus. Spätestens im Bereich der Schweißstelle, d.h. in Fig. 2 unterhalb der Düsenaustrittsöffnung 20, werden die Pulverpartikel 21 von der Wärmeenergie des Laserstrahls 22 aufgeschmolzen, so dass auf der Oberfläche 3 des Walzengrundkörpers 4 eine Auftragsschweißnaht 23 erzeugt werden kann. Aus einer oder mehreren übereinander angeordneten Auftragsschweißnähten 23 wird das Schneidmesser 5 mit in der Aufsicht beliebiger Geometrie auf der Oberfläche 3 des Walzengrundkörpers 4 aufgebaut. Nach Abschluss des Auftragsschweißvorgangs erfolgt eine vorzugsweise spanende Nachbearbeitung zur Herstellung des endgültigen Schneidmessers 5 mit der gewünschten Schneidengeometrie.

Die Pulverdüse 8 weist entsprechend Fig. 2 eine Innenwandung 24 sowie eine Außenwandung 25 auf. Zwischen der Innenwandung 24 und der Außenwandung 25 befindet sich der ringraumförmige Schutzgas- und Pulvertransportkanal 26, dessen Querschnitt sich in Fig. 2 nach unten verjüngt und der schließlich in die Düsenaustrittsöffnung 20 mündet. Dem Schutzgas- und Pulvertransportkanal 26 wird durch die beiden Schutzgastransportleitungen 15 Schutzgas, beispielsweise Argon, Helium, Stickstoff, Wasserstoff oder Gemische aus diesen Gasen, zugeführt, das die Schweißstelle abschirmt. Durch die Pulvertransportleitungen 13 wird dem Schutzgas- und Pulvertransportkanal 26 das Pulver zugeführt. Sofern das durch die Pulvertransportleitungen 13 zugeführte Transportgas die Schutzgasfunktion übernimmt, kann auch eine Pulverdüse 8 ohne separate Schutzgasleitung 15 bzw. ohne separaten Anschluss für eine Schutzgasleitung 15 Anwendung finden. Es besteht zusätzlich die Möglichkeit, dem Düsenkanal 19 durch die Schutzgasleitung 15' aus der Schutzgasleitung 15 abgezweigtes Schutzgas oder ein anderes Schutzgas, das sich seiner Zusammensetzung nach von dem durch die Schutzgasleitung 15 zugeführten Schutzgas unterscheidet, zuzuführen.

Wie in Fig. 2 zu erkennen ist, befindet sich im Strahlengang des Laserstrahls 22 oberhalb des Düsenkanals 19 ein optischer Strahlteiler 9, bei dem es sich beispielsweise um einen einseitig beschichteten Spiegel handeln kann, der für den auf die nicht verspiegelte Seite auftreffenden Laserstrahl durchlässig ist. In einem Gehäuse 28 oberhalb des Strahlteilers 9 befindet sich hier nicht näher interessierende Optik zur optischen Aufbereitung, insbesondere Fokussierung, des Laserstrahls 22.

Das an der Schweißstelle entstehende Schmelzbad aus geschmolzenen Pulverpartikeln 21 emittiert Wärme- bzw. Lichtstrahlung in die Umgebung. Ein Teil dieser Strahlung gelangt gemäß Pfeil S₁ entgegen der Laufrichtung des Laserstrahls 22 in den Düsenkanal 19 und trifft gemäß Pfeil S₂ auf den Strahlteiler 9 auf. Dieser lenkt die emittierte Wärme- bzw. Lichtstrahlung gemäß Pfeil S₃ zu einer Messeinrichtung 10 um, die aus der ihr zugeführten Strahlung ein Signal ermittelt, das ein Maß für die Temperatur des Schmelzbades an der Schweißstelle darstellt. Dieses Signal wird schließlich einem in Fig. 2 schematisch angedeuteten Steuer- oder Regelkreis 27 zugeführt. Der Steuer- oder Regelkreis 27 enthält einen Vergleicher, der ermittelt, ob die Ist-Temperatur des Schmelzbades einer vorgegeben Soll-Temperatur entspricht oder nicht. Je nach Abweichung der Ist-Temperatur von der Soll-Temperatur erfolgt die Steuerung bzw. Regelung der Leistung des Diodenlasers 6, so dass eine Korrektur etwaiger Abweichungen von der Soll-Temperatur möglich ist. Die Soll-Temperatur wird dem Steuer- bzw. Regelkreis 27 in Abhängigkeit diverser Schweißparameter vorgegeben, wie beispielsweise der Zusammensetzung der Pulverpartikel 21, der Zusammensetzung des Transportgases, der Zusammensetzung des Schutzgases, der Art des Werkstoffs des Walzengrundkörpers 4 sowie der Art und Wellenlänge des Laserstrahls 22. Bei der Messeinrichtung 10 handelt es sich vorzugsweise um einen optischen Sensor. Bei dem Steuer- oder Regelkreis handelt es sich vorzugsweise um einen Gleichspannungssteuer- oder Regelkreis, der die Laserleistung beeinflusst.

Fig. 3 zeigt eine Aufsicht auf eine erfindungsgemäß hergestellte Schneidwalze 2 mit durch Laserauftragsschweißen hergestelltem Schneidmesser 5, das im Wesentlichen eine Rechteckform aufweist. Schneidmesser 5 mit dieser Geometrie werden beispielsweise in Briefhüllenherstellungsmaschinen zum Ausschneiden von Adressfenstern in Briefhüllen benötigt.

In Fig. 4, die eine Schnittansicht gemäß Schnitt A-A in Fig. 3 zeigt, ist der Aufbau des Schneidmessers 5 zu erkennen. Es besteht bei der gezeigten Ausführungsform aus zwei über- bzw. aufeinander angeordneten Auftragsschweißnähten 23' und 23". Die Pfeile R₁, R₂, R₃ und R₄ kennzeichnen die Bewegungsrichtung des Arbeitskopfes 7 bzw. der Pulverdüse 8 bei der Herstellung des gezeigten Schneidmessers 5. Zunächst wurde entsprechend der Pfeile R₁ und R₂ die Auftragsschweißnaht 23" unmittelbar auf der Oberfläche 3 des Walzengrundkörpers 4 erzeugt. Aufgrund des verhältnismäßig kalten Walzengrundkörpers 4 tritt dabei eine relativ große Wärmeabfuhr von der jeweiligen Schweißstelle und somit dem Schmelzbad auf, so dass die Energiezufuhr über den Laserstrahl diesen Wärmeverlust des Schmelzbades ausgleichen und die Leistung des Diodenlasers 6 entsprechend hoch eingestellt werden muss.

Beim Schließen der geschlossen umlaufenden Rechteckkontur der Auftragsschweißnaht 23' bzw. dem Übergang in die Phase des Erzeugens der zweiten Auftragsschweißnaht 23" ändern sich die Wärmeabfuhrverhältnisse. Insbesondere in dem in den Fig. 3 und 4 gekennzeichneten Übergangsbereich B zwischen der Auftragsschweißnaht 23' und der Auftragsschweißnaht 23" entsteht eine inhomogene Stelle, die eine mechanische Schwächung des Schneidmessers 5 bedeutet, wenn der Vorgang des Aufschmelzens der Pulverpartikel 21 nicht kontinuierlich wie bei der Erzeugung der Auftragsschweißnaht 23' fortgeführt wird. Da sich das Schmelzbad in dem Übergangsbereich B und danach während der Erzeugung der Auftragsschweißnaht 23" nicht mehr in unmittelbarem Kontakt mit der Oberfläche 3 des Walzengrundkörpers 4 befindet, sondern mit der noch wärmeren Auftragsschweißnaht 23', verringert sich die Wärmeabfuhr von dem Schmelzbad. Dies bedeutet, das Schmelzbad würde heißer, wenn der Diodenlaser 6 mit gleich bleibender Leistung betrieben werden würde. Dies wiederum würde einen andersartigen Aufschmelzvorgang der ihrer Zusammensetzung nach unveränderten Pulverpartikel 21 zur Folge haben, der zu den unerwünschten Inhomogenitäten bzw. mechanischen Schwächungen führt. Erfindungsgemäß wird daher ständig und in Echtzeit die Ist-Temperatur des Schmelzbades erfasst, so dass sie ohne wesentliche Zeitverzögerung sofort auf die vorgegebene Soll-Temperatur nachgesteuert bzw. ―geregelt werden kann. Das Ergebnis sind mechanisch hoch beanspruchbare sowie hoch verschleißfeste Schneidmesser 5.

Die vorliegende Erfindung bringt bei Schneid- und Prägewalzen sowohl für die Briefhüllen- als auch für die Etikettenherstellung erhebliche Vorteile mit sich. Beispielhaft sei hier die Reduzierung von Lieferzeiten sowie Herstellungskosten genannt. Insbesondere entfallen jegliche Kosten für das nachträgliche Härten der Schneidmesser bzw. Prägevorsprünge, da ein derartiges Härten nicht mehr erforderlich ist. Im Übrigen sind nachträgliche Reparaturen der Schneid- oder Prägewalzen möglich. Durch die Möglichkeit der Reparatur bereits fertig bearbeiteter Schneid- oder Prägewalzen kann auch das Fertigungsrisiko erheblich minimiert werden. Auch Prägevorsprünge an Prägewalzen müssen nicht mehr aus dem Vollen gefräst werden. Ein punktuelles Aufschweißen der Geometrie von Prägevorsprüngen sowie ein punktuelles Nacharbeiten der Prägevorsprünge ist möglich.

### BEZUGSZEICHENLISTE

- 1: Vorrichtung
- 2: Schneidwalze
- 3: Oberfläche des Walzengrundkörpers
- 4: Walzengrundkörper
- 5: Schneidmesser
- 6: Diodenlaser
- 7: Arbeitskopf
- 8: Pulverdüse
- 9: Strahlteiler
- 10: Messeinrichtung
- 11: Lichtleiter
- 12: Pulverzuführeinrichtung
- 13: Pulvertransportleitung
- 14: Schutzgaszuführeinrichtung
- 15: Schutzgastransportleitung
- 16: Werkzeugmaschine
- 17: Pulverbehälter
- 18: Gasflasche
- 19: Düsenkanal
- 20: Düsenaustrittsöffnung
- 21: Pulverpartikel
- 22: Laserstrahl
- 23, 23', 23": Auftragsschweißnaht
- 24: Innenwandung
- 25: Außenwandung
- 26: Schutzgas- und Pulvertransportkanal
- 27: Steuer- oder Regelkreis
- 28: Gehäuse
- X, Y, Z: Raumrichtung
- A: Drehachse

## Patentansprüche

1. Verfahren zur Herstellung einer Schneid- oder Prägewalze (2) mit aus der Oberfläche (3) eines Walzengrundkörpers (4) hervorstehendem Schneidmesser (5) oder Prägevorsprung, umfassend folgenden Schritt:
a) ein- oder mehrschichtiges Auftragen des Schneidmessers (5) oder des Prägevorsprungs auf den Walzengrundkörper (4) mittels Laserauftragsschweißen, wobei die jeweilige Schicht mit Hilfe eines pulverförmigen Zusatzwerkstoffs erzeugt wird, der in einem an der Schweißstelle entstehenden Schmelzbad geschmolzen wird,
des weiteren
**gekennzeichnet durch**
folgende Schritte:
b) Erfassen der von dem Schmelzbad emittierten Wärme- und/oder Lichtstrahlung zumindest während des Auftragens der jeweiligen Schicht, und
c) Steuern oder Regeln der Leistung des zum Laserauftragsschweißen verwendeten Lasers (6) in Abhängigkeit von der emittierten Wärme- und/oder Lichtstrahlung des Schmelzbades derart, dass die Temperatur des Schmelzbades während des Auftragens der jeweiligen Schicht im wesentlichen konstant bleibt,
wobei die Wellenlänge des von dem zum Laserauftragsschweißen verwendeten Lasers (6) abgegebenen Laserstrahls (22) in Abhängigkeit von dem Absorptionsvermögen der den pulverförmigen Zusatzwerkstoff bildenden Pulverpartikel (21) eingestellt wird.

2. Verfahren nach Anspruch 1,
**dadurch gekennzeichnet, dass**
für das Laserauftragsschweißen ein Diodenlaser verwendet wird.

3. Verfahren nach Anspruch 2,
**dadurch gekennzeichnet, dass**
mit dem Diodenlaser Laserlicht mit Wellenlängen von 808 nm bis 980 nm erzeugt wird.

4. Verfahren nach Anspruch 2,
**dadurch gekennzeichnet, dass**
mit dem Diodenlaser Laserlicht mit überlagerten Wellenlängen von 940 nm und 980 nm erzeugt wird.

5. Verfahren nach einem der Ansprüche 2-4,
**dadurch gekennzeichnet, dass**
der Querschnitt des von dem Diodenlaser erzeugten Laserstrahls (22) mittels eines Lichtleiters (11) in einen kreisrunden Querschnitt umgewandelt wird.

6. Verfahren nach einem der vorangehenden Ansprüche,
**dadurch gekennzeichnet, dass**
der pulverförmige Zusatzwerkstoff der Schweißstelle mittels eines Transportgases zugeführt wird, das gleichzeitig als Schutzgas zur Abschirmung der Schweißstelle fungiert.

7. Verfahren nach einem der vorangehenden Ansprüche,
**dadurch gekennzeichnet, dass**
als pulverförmiger Zusatzwerkstoff eine Pulverzusammensetzung verwendet wird, die weniger als oder gleich 90 Gew.-% Fe und zusätzlich einen oder mehrere Legierungsbestandteil(e) ausgewählt aus der Gruppe bestehend aus B, Si, W, V, Cr, C, SI, Co, Mn, Mg, Ti, Zirkonoxid und Aluminiumoxid enthält.

8. Verfahren nach einem der vorangehenden Ansprüche 1-6,
**dadurch gekennzeichnet, dass**
als pulverförmiger Zusatzwerkstoff eine Pulverzusammensetzung verwendet wird, die weniger als oder gleich 70 Gew.-% Co und zusätzlich einen oder mehrere Legierungsbestandteil(e) ausgewählt aus der Gruppe bestehend aus B, Si, W, V, Cr, C, Si, Co, Mn, Mg, Ti, Zirkonoxid und Aluminiumoxid -enthält.

9. Verfahren nach einem der vorangehenden Ansprüche 1-6,
**dadurch gekennzeichnet, dass**
als pulverförmiger Zusatzwerkstoff eine Pulverzusammensetzung verwendet wird, die weniger als oder gleich 70 Gew.-% Ni und zusätzlich einen oder mehrere Legierungsbestandteil(e) ausgewählt aus der Gruppe bestehend aus B, Si, W, V, Cr, C, Si, Co, Mn, Mg, Ti, Zirkonoxid und Aluminiumoxid enthält.

## Claims

1. A method for producing a cutting or embossing roller (2) having a cutting knife (5) or embossing projection that projects out of a surface (3) of a base body (4) of the roller comprising the following steps:
a) applying by laser resurfacing welding the cutting knife (5) or the embossing projection in one or more layers onto the base body (4) of the roller, each layer of the at least one layer being produced using an added material in powder form melted in a melt bath at a weld point;
further
**characterised by**
the following steps:
b) detecting heat and/or light radiation emitted by the melt bath at least during application of each layer; and
c) controlling or regulating power of a laser (6) used in the laser resurfacing welding as a function of the heat and/or light radiation emitted by the melt bath so that the melt bath temperature remains substantially constant during application of each layer,
wherein the wavelength of the laser beam (22) produced by the laser (6) used for the laser resurfacing welding is set as a function of absorption capacity of powder particles that form the added material in powder form.

2. The method according to claim 1,
**characterised in that**
a diode laser is used for the laser resurfacing welding.

3. The method according to claim 2,
**characterised in that**
laser light having wavelengths of 808 nm to 980 nm is generated with the diode laser.

4. The method according to claim 2,
**characterised in that**
laser light having superimposed wavelengths of 940 nm and 980 nm is generated with the diode laser.

5. The method according to one of claims 2-4,
**characterised in that**
the cross-section of the laser beam (22) generated with the diode laser is converted to a circular cross-section by means of a light guide (11).

6. The method according to one of the preceding claims,
**characterised in that**
the added material in powder form is passed to the weld point by a transport gas that simultaneously functions as an inert gas for shielding the weld point.

7. The method according to one of the preceding claims,
**characterised in that**
a powder composition is used as the added material in powder form, the powder composition containing less than or equal to 90 wt-% Fe and, in addition, one or more alloy components selected from the group consisting of B, Si, W, V, Cr, C, Co, Mn, Mg, Ti, zirconium oxide and aluminium oxide.

8. The method according to one of the preceding claims 1-6,
**characterised in that**
a powder composition is used as the added material in powder form, the powder composition containing less than or equal to 70 wt.-% Co and, in addition, one or more alloy components selected from the group consisting of B, Si, W, V, Cr, C, Co, Mn, Mg, Ti, zirconium oxide and aluminium oxide.

9. The method according to one of the preceding claims 1-6,
**characterised in that**
a powder composition is used as the added material in powder form, the powder composition containing less than or equal to 70 wt.-% Ni and, in addition, one or more alloy components selected from the group consisting of B, Si, W, V, Cr, C, Co, Mn, Mg, Ti, zirconium oxide and aluminium oxide.

## Revendications

1. Procédé de fabrication d'un cylindre de coupe et de gaufrage (2) comportant une lame tranchante (5) ou une proéminence gaufreuse faisant saillie de la surface du corps de base du cylindre (4), procédé comprenant l'étape suivante :
a) Réalisation de la lame tranchante (5) ou de la proéminence gaufreuse sur le corps de base du cylindre (4) au moyen de soudage au laser par apports de matière en une ou plusieurs couches, la couche respective étant obtenue grâce à une matière d'apport sous forme de poudre, qui est fondue dans un bain de fusion se formant à l'endroit de la soudure,
**caractérisé en plus**
par les étapes suivantes :
b) captage du rayonnement de chaleur et/ou lumineux au moins pendant l'apport de la couche respective, et
c) commande ou réglage de la puissance du laser (6) utilisé pour le soudage au laser par apports de matière en fonction du rayonnement de chaleur et/ou lumineux du bain de fusion, de façon que la température du bain de fusion reste essentiellement constante pendant l'apport de la couche respective,
la longueur d'onde du faisceau laser (22) émis par le laser utilisé étant réglée en fonction du pouvoir d'absorption des particules pulvérulentes formant la matière d'apport en forme de poudre.

2. Procédé suivant la revendication 1,
**caractérisé en ce qu'**un laser à injection est utilisé pour le soudage au laser d'apports de matière.

3. Procédé suivant la revendication 2,
**caractérisé en ce qu'**un faisceau laser d'une longueur d'onde de 808 nm à 980 nm est produit grâce au laser à injection.

4. Procédé suivant la revendication 2,
**caractérisé en ce qu'** un faisceau laser de longueurs d'ondes superposées de 940 nm et 980 nm est produit grâce au laser à injection.

5. Procédé suivant une des revendications 2 à 4,
**caractérisé en ce que** la section transversale du faisceau laser (22) produit par le laser à injection est transformée en une section circulaire au moyen d'un conduit de lumière.

6. Procédé suivant une des revendications précédentes,
**caractérisé en ce que** la matière d'apport en forme de poudre de l'endroit de soudure est amenée au moyen d'un gaz véhiculeur, qui fait en même temps office de gaz de protection pour mettre l'endroit de soudure sous écran.

7. Procédé suivant une des revendications précédentes,
**caractérisé en ce que** comme matière d'apport en forme de poudre est utilisée une composition de poudre , dont la teneur en Fe est inférieure ou égale à 90% en poids et qui contient en plus un ou plusieurs composants d'alliage choisis parmi le groupe constitué de B, S, W, V, Cr, C, Si, Co, Mn, Mg, Ti, oxyde de zirconium et oxyde d'aluminium.

8. Procédé suivant une des revendications précédentes 1 à 6,
**caractérisé en ce que** comme matière d'apport en forme de poudre est utilisée une composition de poudre, dont la teneur en Co est inférieure ou égale à 70% en poids et qui contient en plus un ou plusieurs composants d'alliage choisis parmi le groupe constitué de B, Si, W, V, Cr, C, Si, Co, Mn, Mg, Ti, oxyde de zirconium et oxyde d'aluminium.

9. Procédé suivant une des revendications précédentes 1 à 6,
**caractérisé en ce que** comme matière d'apport est utilisée une composition de poudre, dont la teneur en Ni est inférieure ou égale à 70% en poids et qui contient en plus un ou plusieurs composants choisis parmi le groupe constitué de B, Si, W, V, Cr, C, Si, Co, Mn, Mg, Ti, oxyde de zirconium et oxyde d'aluminium.
